## Europäisches Patentamt
## European Patent Office
## Office européen des brevets

(19)

(11) Publication number: **0 026 320**
**B1**

(12)

# EUROPEAN PATENT SPECIFICATION

(45) Date of publication of patent specification: **23.11.83**

(21) Application number: **80104965.1**

(22) Date of filing: **21.08.80**

(51) Int. Cl.³: **G 11 B 5/02,** G 11 B 5/52, G 11 B 15/60, G 11 B 5/27

(54) Data recorder/reader and method of operating same.

(30) Priority: **20.09.79 US 77505**

(43) Date of publication of application:
**08.04.81 Bulletin 81/14**

(45) Publication of the grant of the patent:
**23.11.83 Bulletin 83/47**

(84) Designated Contracting States:
**DE FR GB IT**

(56) References cited:
**US - A - 3 932 894**
**US - A - 3 986 209**
**US - A - 4 011 587**

**Patents Abstracts of Japan Vol. 3, No. 86, 24th July 1979 page 68E125**
**IBM TECHNICAL DISCLOSURE BULLETIN, Vol. 21, No. 12, May 1979 New York N.K. ARTER et al. "Recording Narrow Tracks" page 4780**

(73) Proprietor: **International Business Machines Corporation**
**Old Orchard Road**
**Armonk, N.Y. 10504 (US)**

(72) Inventor: **Arter, Nelson Kay**
**8687 Morton Road**
**Longmont, CO (US)**
Inventor: **Devore, Ernest William**
**7351 Panorama Dr.**
**Boulder, CO 80303 (US)**
Inventor: **Wills, Arthur Barton**
**855 E. Laurel Ave.**
**Boulder, CO 80303 (US)**
Inventor: **Zelenka, Leslie Ray**
**330 N. Schrader Lane**
**Tucson, AZ 85710 (US)**

(74) Representative: **Petersen, Richard Courtenay**
**IBM United Kingdom Patent Operations Hursley Park**
**Winchester Hants. SO21 2JN (GB)**

Data recorder/reader and method of operating same

The present invention relates to data recorder/readers and a method of operating the same. It has a particular, but not exclusive, application to those data recorder/readers employing cyclic recording and readback operations which may include a portion of a cycle during which no signals are sensed.

In digital signal recording, there is a continuing desire to increase recording density. While, in many instances, the record media designed to retain signals at one recording density can retain signals at an increased density, data recorder/readers designed for such record media have to be substantially changed. In many instances, there is no forward/backward compatibility between the original low density recording and the new high density recording. Such incompatibilities, which in many instances are unavoidable, add to the cost of signal recording and are to be avoided if at all possible.

Forward/backward compatibility was achieved in one-half inch tape digital data signal records originally, when one-half inch tapes used NRZI recording at 200, 556 and 800 bytes per lineal inch. Operator selection was required for the digital data recorders to operate with different density tapes. When phase encoded recording came in, all phase encoded tapes were identified by a burst of phase encoded signals in a plurality of tracks at the beginning of tape. Such identification was called a TEID. Such tapes were used in conjunction with NRZI tapes, which still required operator intervention for successful recorder operation at multiple linear densities. Increase of recording density can also be achieved by increasing track density while not changing lineal density, or by simultaneously changing both densities.

In an article in the IBM Technical Disclosure Bulletin, Vol. 21, No. 12, May 1979 page 4780, is disclosed a data recorder/reader including a transducer having a full-width write gap followed by a half-width read gap. The write gap is used to write wide data tracks by stepping transversely by a distance equal to the pitch of the wide tracks or to write juxtaposed narrow data tracks by stepping transversely by a distance equal to the pitch of the narrow tracks. The read gap can read either the wide tracks or the narrow tracks by similar transverse stepping.

Higher density signal recording open yields an effective higher data rate. This is particularly true with increased lineal densities. When increasing track density without increasing the lineal density, the burst data rate does not increase or does the effective (average) data rate increase. Accordingly, it is desirable to increase track density while simultaneously increasing the effective data rate, all at a minimal cost in the recorder.

As mentioned above, multiple densities in one-half inch tapes required manual selections. With present day automation, it is highly desirable to increase the flexibility of recorder/readers for enabling automatic operation than is amenable to diverse track densities.

Many recorder/readers transfer data signals during only a portion of time. Examples are rotating head recorders, reciprocating head recorders, during track switching in any recorder, and those recorders employing so-called sector servos. The time remaining in recorder cycles is termed "dead time"—no data is transferred. Such dead time is dedicated to servoing, moving the magnetic record medium with respect to a transducer, or *vice versa,* as well as performing other miscellaneous control functions. It is desirable to minimize the adverse effect on data rates of such dead time in signal recorder/readers. When employing such automatic means, the arrangement on the record medium should facilitate the automation of multiple density recording for achieving full automatic forward/backward compatibility among physically similar record members with different recording densities.

The invention seeks to enhance data recorder/reader operation to accommodate different recording densities, and to enhance effective signal transfer rates.

The invention also seeks to provide buffering with immediate processing to enhance the data accessibility.

According to the invention, a data recorder/reader adapted to exchange data with a record member, includes a transducer adapted to scan tracks on the record member and having a write gap track with a first width and a read gap parallel to the write gap and aligned with the write gap in the direction of scan, the read gap having a width corresponding to a second track width, being a fraction of the first track width, and positioning means operative during recording to cause relative movement of the transducer and record member transverse to the tracks according to juxtaposed second width tracks for high track density recording or according to juxtaposed first width tracks for low track density recording, and operative during reproducing to cause relative movement of the transducer and record member transverse to the tracks according to juxtaposed first width tracks for low track density reading, is characterised in that there is a plurality $N$ ($\geq 2$) of read gaps aligned with each other parallel to the write gap and aligned with the write gap in the direction of scan, each of the read gaps having a width corresponding to the second track width, being substantially a fraction 1/N of the first track width, whereby to scan simultaneously a plurality of N of second width tracks, or a single width track, in that the positioning means is operative during reproducing to cause relative movement of the transducer and record member transverse to the tracks according to juxtaposed groups of a plurality N of second width tracks, for high track density reading, in that means is provided for simultaneously receiving signals from the read gaps which simultaneously scan a plurality N of second width tracks, and in that means is provided for serializing all signals produced from the simultaneous scanning for high track density recording.

Preferably, the recorder/reader has a cyclic period of operation during a predetermined portion of which the transducer scans a data record area on the record member, means for serially transferring signals from one of the read gaps while the head is scanning the record area, means for momentarily storing signals read from the other read gap or gaps during the predetermined portion of the cyclic period, and means for serially transferring the stored signals from the other read gap or gaps during a portion of the cyclic period outside the predetermined portion.

The invention further extends to a method of operating such a data recorder/reader to read signals recorded in parallel data tracks with high track density, including the steps of simultaneously longitudinally scanning a selected plurality N of record tracks using the read gaps of the transducer to produce a plurality N of simultaneous trains of sensed signals, causing relative movement of the record medium and the transducer by a predetermined transverse distance equal to the first track width, repeating the simultaneous scanning and relative movement causing steps and, for each such repetition, processing one of the trains sensed signals as such signals are sensed from the record medium, buffering and storing all other trains of sensed signals, and processing the buffered trains before repeating each simultaneous scanning.

The scope of the invention is defined by the appended claims; and how it can be carried into effect is hereinafter particularly described with reference to the accompanying drawings, in which:

Figure 1 is a diagram illustrating the time of operation of a magnetic rotating head recorder/reader according to the present invention;

Figure 2 is a simplified diagram of parts of a rotating head recorder/reader according to the present invention;

Figure 3 is a diagram of a record member used with the recorder/reader of Figure 2;

Figure 4 is a diagram of a record storage disk which may be used in a recorder/reader according to the present invention; and

Figure 5 shows a magnetic card for use with a recorder/reader according to the invention.

The first embodiment of the invention is described in relation to its application to a magnetic recorder/reader such as is disclosed in US 3,932,894 and GB 1,479,861. In such a recorder/reader, a magnetic record tape is wrapped helically around a spool and data is magnetically recorded on and/or read from the tape by a rotating magnetic head.

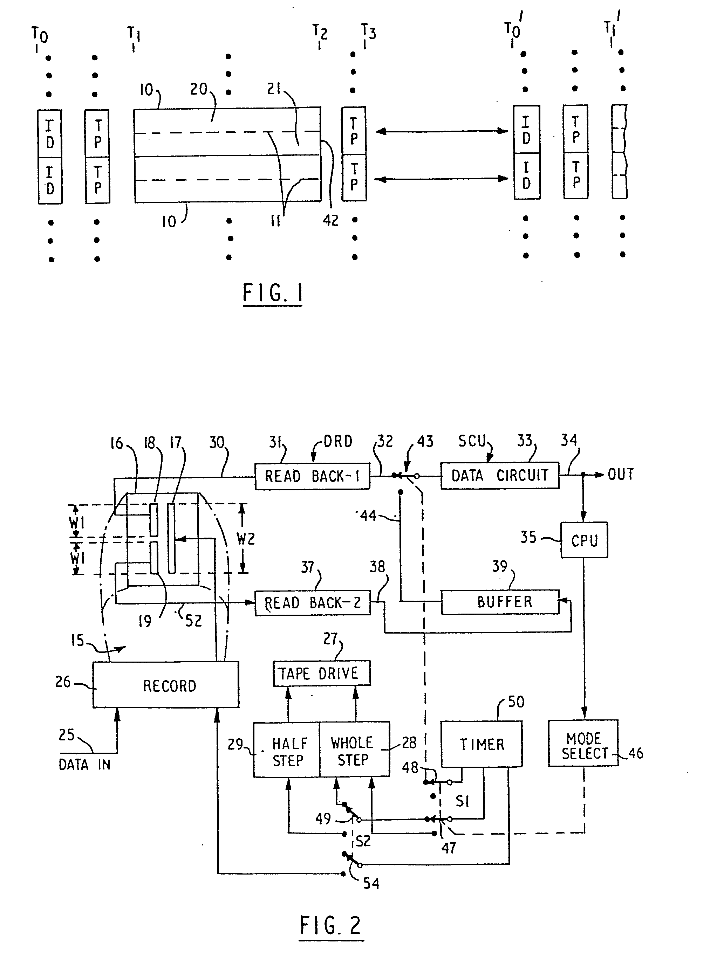

Data is recorded on or read from adjacent stripes 10 (Fig. 1) which are located between pre-recorded track positioning signals in two portions TP and track identification signals in portion ID. After the rotating magnetic head has passed one edge of the tape, it reaches the track identification signal portion TP at time $T_0$. Thereafter, the head senses the track identification signals which are used to check that the head is scanning a particular stripe 10, from which data is to be read or on which data is to be recorded. The head then passes over the first track positioning signal portion ID and senses the track positioning signals which are used to align the tape so that the head is centred upon the particular stripe 10 addressed. Thereafter, the head reaches the beginning of the stripe 10 at time $T_1$ and data is read from or recorded on the stripe by the head until the end of the stripe is reached at time $T_2$. Thereafter, the head passes over the second track positioning signal portion TP, sensing the track positioning signals, which are used to check the alignment of the head and stripe, and leaves this portion at time $T_3$. The head then passes over the other edge of the tape and over any space between the adjacent edges of the tape before reaching the next track identification signal portion ID at time $T_0'$. This track identification signal portion may be the same as that reached at time $T_0$ or it may be another if the tape is stepped between times $T_3$ and $T_0'$. The head then passes over track identification signal portion ID and first track positioning signal portion TP and reaches stripe 10 at time $T_1'$.

It will thus be seen that the particular rotating head signal recorder/reader has a dead time—i.e., a time when the transducer is not scanning the record member—from $T_3$ to $T_0'$ time. In a pure data transfer sense, the dead time occurs not only from $T_3$ to $T_0'$ time, but rather from $T_2$ to $T_1'$ time when the head is scanning portions TP and ID. Such dead times can be used for processing data signals when such processing is independent of the signals being transferred through a sensing or recording transducer. To this end, doubling the track density in the areas of data stripes 10 can effectively double the average data rate of the signal recorder without altering the lineal density or the instantaneous burst data rate. Doubling track density is indicated by the dashed lines 11 indicating one-half width stripes 20 and 21 in each stripe 10.

When increasing the track density in this manner, it is desirable to provide forward/backward compatibility between the various data record media. Such forward/backward compatibility and increasing the effective data rate is achieved by modifying the recorder/reader, of US 3,932,894 and GB 1,479,861, illustrated in Figure 2. It will be appreciated that this shows only the parts of the recorder/reader and circuits which are pertinent to the present invention, and that substantially more circuits and parts are needed for a practical embodiment.

A rotor, indicated diagrammatically by dashed lines 15 in Fig. 2, carries a three gap magnetic transducer 16 for scanning a magnetic record tape (not shown). Transducer 16 has a write gap 17 with a width W2 equal to the width of a basic data stripe 10 (Fig. 1). Therefore, during each recording operation, the stripe recorded by the recorder will be equal to the original track density of the data recorder. A pair of read gaps 18 and 19, each having a width W1, are in a trailing relationship to write gap 17. Gaps 18 and 19 are adapted to scan essentially one-half the width of a basic stripe 10. The gaps 18 and 19 are aligned, so that gap 18 will scan a one-half width stripe 20 (Fig. 1) simultaneously with gap 19 scanning one-half width stripe 21. In a practical embodiment, there is a small space between the adjacent ends of the gaps 18 and 19, but W1 is substantially one half of W2.

The use of a wide gap to record narrow record tracks (stripes) by a plurality of positioning steps transverse to track length less than the width of a write gap is known. The same technique is used in the present embodiment in generating half width stripes 20 and 21. To this end, data signals received on an input line 25 are supplied to recording circuits 26, which may be constructed in any known manner. Recording circuits 26 supply signals to be recorded to wide write gap 17.

In the recorder/reader of US 3,932,894 and GB 1,479,861, the tape is stepped by a tape drive in one tape positioning mode in which the tape positioning step transverse to track length is substantially equal to the width of the write gap.

In the present embodiment, a tape drive 27 (Fig. 2) is operable in two tape positioning modes, in one of which the tape positioning step transverse to track length is substantially equal to the width of the write gap (whole step) and in the other of which the tape positioning step transverse to track length is substantially equal to half the width of the write gap (half step).

To record at the lower stripe density, a whole step flip-flop 28 is set to enable tape drive 27 to move the tape across the path of the rotating head 16 by the width of stripe 10. To record at the higher stripe density, a half step latch 29 is set to enable the tape drive 27 to move the tape across the path of the rotating head 16 by one-half the width of stripe 10. For example, if the movement of the magnetic tape is controlled by a stepping motor and four steps of the motor are needed to move the tape with respect to head 16 to achieve a track width 10, then tape drive 27 in the half step mode causes only two steps of the motor to generate one-half width stripes 20 and 21 at twice stripe density.

Read back of data recorded at the lower stripe density in stripe 10 is through the read gap 18. The signals from read gap 19 may be ignored. The signals sensed by gap 18 are supplied over line 30 to read back circuit 31, which may be similar to that disclosed in the recorder/reader of US 3,932,894 and GB 1,479,861. The read back circuit 31 detects the data in the read back signals and supplies a stream of digital data signals over line 32 each time the gap 18 scans a data stripe 10. From line 32 the detected digital data signals are supplied through a single pole double throw switch 43, of the electronic type, to data circuit 33 for further processing. In the present embodiment, the data circuit 33 consists of error detection and correction circuits for ensuring that the signals sensed from the tape are correct and, if not correct, are corrected. Data circuit 33 in turn supplies the detected and corrected signals over line 34 as output signals from the recording system, for example, to a central processing unit or computer 35. The tape drive 27 and read back circuit 31 may be in a so-called data recording device DRD. The data circuit 33, and other controls (not shown) associated with a data recording subsystem, may be in a storage control unit SCU.

To provide for the second mode of operation and read back data recorded at double track density, a second read back circuit 37 receives sensed signals from read gap 19 over line 52. Circuits 31 and 37 operate simultaneously, detecting signals from the gaps 18 and 19. During double track density read back read back circuit 31 supplies detected signals from half width track 20 over line 32 to data circuit 33. Simultaneously detected signals from half width track 21 are supplied by read back circuit 37 over line 38 to a digital data buffer 39. Buffer 39 consists of a random access memory employing semiconductive bistable circuits, magnetic bubbles, CCD's or the like. When gaps 18 and 19 reach the trailing end 42 of half width tracks 20 and 21, the signals from half width track 20 have been processed by data circuit 33 and the signals from half width track 21 have been stored in buffer 39. At that time, the single pole double throw switch 43, is switched to disconnect the input to data circuit 33 from line 32 and connect it to line 44 from the output of buffer 39. Buffered signals are then automatically transferred (using known techniques) from buffer 39 to be processed by data circuit 33 in the same manner as the signals received from read back circuit 31 were processed. The signals from read back circuit 31 are supplied to data circuit 33 between times $T_0$ and $T_3$, whilst the signals from the buffer 39 are supplied to data circuit 33 between times $T_3$ and $T_0'$. In this manner the original burst rate of data signals yields a doubling of the effective data rate of the data recording device DRD while simultaneously doubling the stripe density.

In the particular embodiment described, the alignment of the head with the stripes is achieved by using the write gap 17 as a read gap. It will be appreciated that, as the signals detected in track positioning signal portions TP and track identification signal portions ID by the write gap 17 are processed through circuits other than read back circuits 31 and 37, then the data signals from read back circuit 31 may be supplied to data circuit 33 between times $T_1$ and $T_2$ and the data signals from buffer 39 may be supplied to data circuit 33 between times $T_2$ and $T_1'$.

In the recorder/reader disclosed in US 3,932,894, the tape is so wrapped around the mandrel that the rotor rotates through 270°, whilst the head is under the tape. The length of the record portion of the tape in the head direction (between times $T_0$ and $T_3$) is such that the rotor rotates through less than 180°, whilst the head is under the record portion. Thus the time period between times $T_0$ and $T_3$ is less than that between times $T_0'$ and $T_3'$.

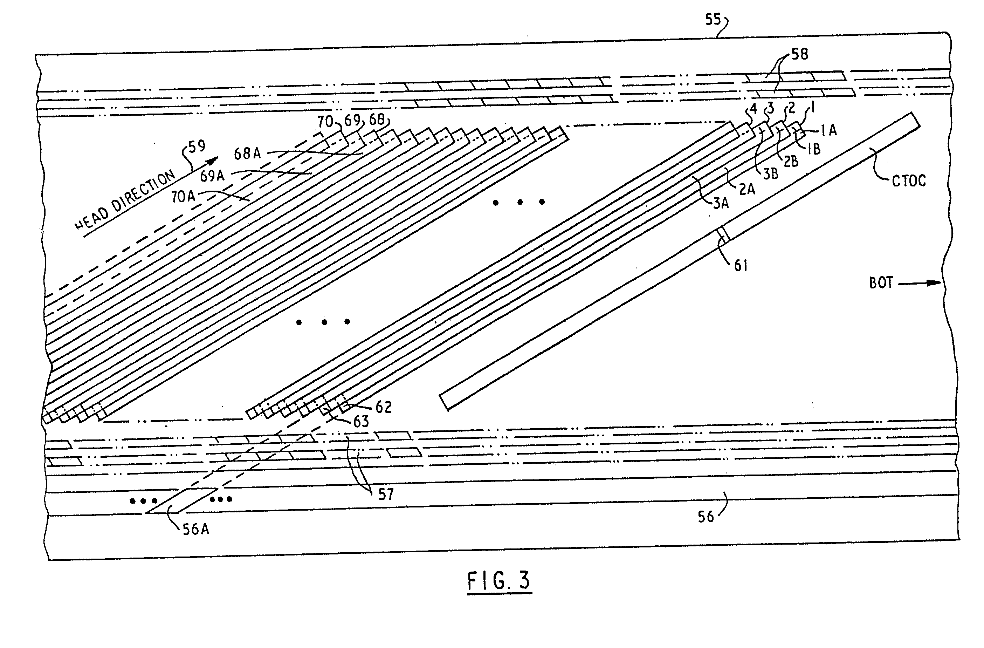

In order to distinguish between magnetic record tapes on which data has been recorded at single track density and those on which data has been recorded at single track density, special signals are recorded on the tape, for example as described below with respect to Fig. 3, which special signals are read first and are supplied by the data circuit 33 to the CPU 35. The CPU 35 evaluates these signals to determine whether the record tape has double or single track density. Upon determination of which track density is employed, mode select flip-flop 46 is set to active or inactive condition.

If the flip-flop 46 is set to active condition, a double pole, double throw switch S1, of the electronic type, is switched so that one pole 48 connects one output of a timer 50 to the control of the switch 43 and the other pole 47 connects a second output of the timer 50 to the common terminal of one pole 49 of a double pole double throw switch S2, of the electronic type.

If the flip-flop 46 is set to inactive condition, the switch S1 is switched so that the one pole 48 is disconnected from the control of the switch 43 and the other pole 47 connects the second output of the timer 50 to the input of the whole step flip-flop 28.

To distinguish between the record and read modes of the recorder/reader, a signal which may be derived from CPU 35, is used to control the switch S2. In the read mode, the pole 49 of the switch S2 connects the common terminal to the input of the whole step flip-flop 28. In the record mode, the pole 49 of the switch S2 connects the common terminal to the input of the half step latch 29 and the other pole 54 of the switch S2 connects a third output from the timer 50 to an enabling circuit of the recording circuits 26.

The timer 50, which may be one such as is disclosed in US 3,932,984 and GB 1,479,861, supplies timed pulses to the pole 47 of the switch S1 to initiate operation of circuit 28 or to initiate operation of circuit 29. The timer 50 also supplies timed pulses to the pole 48 of the switch S1 to effect switching of the switch 43. The timer 50 also supplies timed pulses to the pole 54 of the switch S2 to enable circuits 26.

If high track density read mode is called for, the pole 47 of the switch S1 and the pole 49 of the switch S2 direct timed pulses from the timer 50 to the whole step circuit 28, and the pole 48 of the switch S1 directs timed pulses from the timer 50 to the control of the switch 43. As the pole 54 of the switch S2 is disconnected, the record circuits 26 are not enabled. If the data read back circuits 31 and 37 are being used to read only from the stripe 10, then at or shortly after time $T_2$, when the head 16 passes the trailing end of the stripe, the timer 50 supplies a signal to the pole 47 of the switch S1 to activate the whole step circuit 28 to cause the tape drive 27 to step the tape so that, at time $T_0'$, the head is centred on the adjacent stripe 10. At or shortly after time $T_2$, the timer 50 also supplies a signal to the pole 48 of the switch S1 to actuate the switch 43 to connect the buffer 39 to the data circuit 33. At or shortly before time $T_1'$, the timer 50 supplies a signal to the pole 48 of the switch S1 to actuate the switch 43 to connect the read back circuit 31 to the data circuit 33.

If low track density read mode is called for, the pole 47 of the switch S1 directs timed pulses from the timer 50 to the whole step circuit 28. As the pole 48 of the switch S1 is disconnected from the control of the switch 43, the latter remains in the condition connecting the read back circuit 31 to the data circuit 33. At or shortly after time $T_2$, the timer 50 supplies a signal to the pole 47 of the switch S1 to activate the whole step circuit 28 through the pole 49 of the switch S2 to step the tape so that, at the time $T_0'$, the head is centred on an adjacent stripe 10.

If high track density record mode is called for, the pole 47 of the switch S1 and the pole 49 of the switch S2 direct timed pulses from the timer 50 to the half step circuit 29 and the pole 54 of the switch S2 directs timed pulses from the timer 50 to enable the record circuits 26. At or shortly before time $T_1$, when the head passes the leading end of the stripe, the timer 50 supplies a signal to the pole 54 of the switch S2 to enable the record circuits 26 which cause the gap 17 to record data in the stripe 10. At or shortly after time $T_2$, when the head passes the trailing end of the stripe, the timer 50 supplies a signal to the pole 47 of the switch S1, which through the pole 49 of the switch S2 initiates operation of the half step circuit 29 to cause the tape drive 27 to half step the tape so that, at time $T_0'$, the head overlaps adjacent stripes 10 between the dashed lines 11 (Fig. 1). At or shortly before time $T_1'$, the timer 50 supplies a signal to the pole 54 of switch S2 to enable the record circuits 26 which cause the gap 17 to record data in the lower one-half width stripe 21 of one stripe 10 and the upper one-half-width stripe of the adjacent stripe 10. This recording over-writes the data previously recorded in half stripe 10.

If low track density record mode is called for, the pole 47 of the switch S1 directs timed pulses from the timer 50 to the whole step circuit 28 and the pole 54 of the switch S2 directs timed pulses from the timer 50 to enable the record circuits 26. At or shortly before time $T_1$, the timer supplies a signal to the pole 54 of the switch S2 to enable the record circuits 26. At or shortly after time $T_2$, the timer supplies a signal to the pole 47 of the switch S1 to initiate operation of the whole step circuit 28 to cause the tape drive 27 to step the tape, so that, at time $T_0'$, the head is centred on the adjacent stripe 10.

During read back in the high density mode, whole steps are used, because both gaps 18 and 19 simultaneously read the half track width stripes 20 and 21. During recording in the high density mode, half steps are used to record narrow stripes. The read/write switch S2, is activated in accordance with known techniques, for example, when the data recording device DRD is connected to CPU 35, a channel control word CCW may carry signals through the storage control unit SCU for selecting the read or write mode. In low density read back mode, the switch 43 may be used in the same way as in high density read back mode, so that signals received from gap 19 and stored in buffer 39 can be used as a backup for signals received from gap 18. Thus, if data circuit 33 detects an uncorrectable error in the signals received from read back circuit 31, then using known error recovery procedures, the signals stored in buffer 39 from read back circuit 37 may replace signals from read back circuit 31.

In the application of the invention to the recorder/reader disclosed in US 3,932,894 and GB 1,479,861, use is made of magnetic record tapes of the general format shown therein. A tape 55 (Fig. 3) includes a so-called stripe identification or address track 56, including individually recorded areas 56A by which each data stripe area may be identified, a pair of stripe positioning or servo tracks 57, and a second pair of stripe positioning or servo tracks 58. The head passed in the direction of the arrow 59 under the tape 55, when the latter is helically wound upon the mandrel of the recorder/reader with the beginning of the tape in the direction BOT.

Initially the tape is stepped until the head is in a position to record a "cartridge table of contents" stripe CTOC. This stripe is the full width of the write gap and includes a volume indicator signal 61, which may indicate whether the data is to be recorded at single track density, double track density or at both densities.

The tape is then stepped until the position of the first data stripe 1 is to be recorded is reached as indicated by stripe identification or address information read from track 56. The head is then centred upon the stripe by servo operation from information read from tracks 57 and tracks 58. The head then records appropriate data in the data stripe 1, beginning in area 62 with a data pattern indicating the track density used in recording that stripe. When the head passes the end of the area of stripe 1, the tape is half stepped so that the head is centred on the edge of the stripe 1. After the head has again passed the tracks 56 and 57, it starts to record appropriate data in data stripe 2, beginning in area 63 with a data pattern indicating the track density used in recording that stripe. The data recorded in stripe 2 over-writes the data recorded in one half of the stripe 1, leaving the data in the area 1A of the stripe 1 unaffected. After reaching the end of stripe 2, the head continues to record no data so as to erase any data previously recorded in the area 1B of the stripe 1. The head is again half stepped and centred on the edge of stripe 2.

The same procedure is repeated so as to record data in stripe 3, over-writing previously recorded data in one half of stripe 2, leaving data in the area 2A of stripe 2 unaffected. This procedure continues so that data is recorded in half width areas 1A, 2A, 3A, etc. of overlapping stripes 1, 2, 3, etc.

Because the data thus recorded is usually read out and stored on rotating magnet record disks, the data signal format is related to data signal storage on such magnetic record disks. Many disk storage units have a stack of corotating disks, each disk with a multiplicity of concentric record tracks. Axially aligned tracks are termed "cylinders". For a seventeen surface unit, each cylinder has seventeen axially aligned tracks one on each surface. Each track requires the contents of four stripes to fill it and the data signal format on the illustrated tape is arranged in blocks of stripes capable of storing one "cylinder" of data, that is in sixty-eight stripes. Each block is preceded by a guard stripe containing only special characters, so that each block is effectively of sixty-nine stripes, one stripe being a guard band. In doubling track density the sixty-nine one-half width stripes occupy the space of thirty-four and a half full-width stripes. After recording one cylinder of data, in writing a next adjacent cylinder, the stripe 68 (a full-width stripe) will be partially

overwritten by the data recorded in stripe 70 which is the first or guard stripe of the next block of stripes for the second or next adjacent cylinder.

It will be noted that the addresses of the odd numbered stripes 1, 3, etc, are those of full-width stripes, whilst the addresses of the even numbered stripes 2, 4, etc. are those of the previous full-width stripe plus a half step. Thus the addresses of the initial stripes of odd numbered cylinder blocks (for example stripe 1) are those of full width stripes, and the addresses of the initial stripes of even numbered cylinder blocks (for example stripe 70) are those of full width stripes plus a half step.

If an even number of half stripes was employed for storing a cylinder of data, then each cylinder would start with a stripe with the address of a full-width stripe.

It will be appreciated that data may be recorded on a similar magnetic record tape at low track density, by stepping the tape between stripe recording by whole steps, so that if the first stripe of data is recorded in the area of stripe 1 of Figure 3, the second stripe of data is recorded in the area of stripe 3, and so on. There is then no overlapping or partial over-writing of data on stripes.

Internal data formats can vary. For example, areas 62 and 63 need not contain special data patterns indicating the type of track density employed in that stripe, if such information is obtainable from the volume indicator 61. Each of the data stripes may have a density indicator. For example, two zeros in a row in each of the areas 62 and 63 can indicate the low track density recording, whereas other bit configurations can indicate double density and possibly whether the half width stripe is odd or even numbered. In a similar manner, the area 56A can be modified to indicate density, although it is preferred to have the indicators in the data area itself.

When reading from tape which has been recorded in double track density, as shown in Fig. 3, the head is initially centred on stripe 1 and signals from the areas 1A and 2A are read by the gaps 18 and 19 (Fig. 2), respectively, to the read back circuits 31 and 37. After reading, the tape is stepped a whole step and the head centred on stripe 3. Signals from the areas 3A and 4A are then read back. If the tape had been recorded in single track density, the same tape stepping procedure is adopted, but only the gap 18 is used for read back, unless the error recovery procedure described above is to be used.

Thus data can be recorded on or read from different track density record tapes in the same automatic apparaus. A tape cartridge library may contain a plurality of the data cartridges, with each data cartridge indicating its own individual densities. This allows migration from one or a set of low density data tape cartridges to one or a set of higher density data tape cartridges, the migration occurring during normal operations. This gives the advantage of forward/backward compatibility, particularly in large mass storage systems where data base storage requires constant usage and change. Changes in support programming in microcode control have to be employed in order to take full advantage of such forward/backward capability.

It will be appreciated that the "dead time" between the head ceasing to read one stripe and beginning to read the next may not be equal to or greater than the time for reading one stripe. In such a case during reading of high track density recorded tape, the contents of the buffer holding the data read by the second read gap should be transferable to the data processing circuit within the available "dead time", that is faster than it is read by the head.

It will also be appreciated that, by providing a head with more than two, for example three, aligned read gaps, and by stepping the tape by a step which is a fraction of a hole step, the fraction being the inverse of the number of read gaps, for example one third, multiple, for example triple, track density reading and recording may be achieved. The outputs of each of the read gaps, except the first, are buffered and the buffered outputs supplied sequentially to the data processing circuits.

The precise relationship of the tracks 56, 57 and 58 on the tape 55 is not important for the present invention. For example, tracks 56 and 57 could exchange positions. The invention may be applied to recorder/readers other than the rotating head recorder/reader described, in particular to disk and magnetic and recorder/readers.

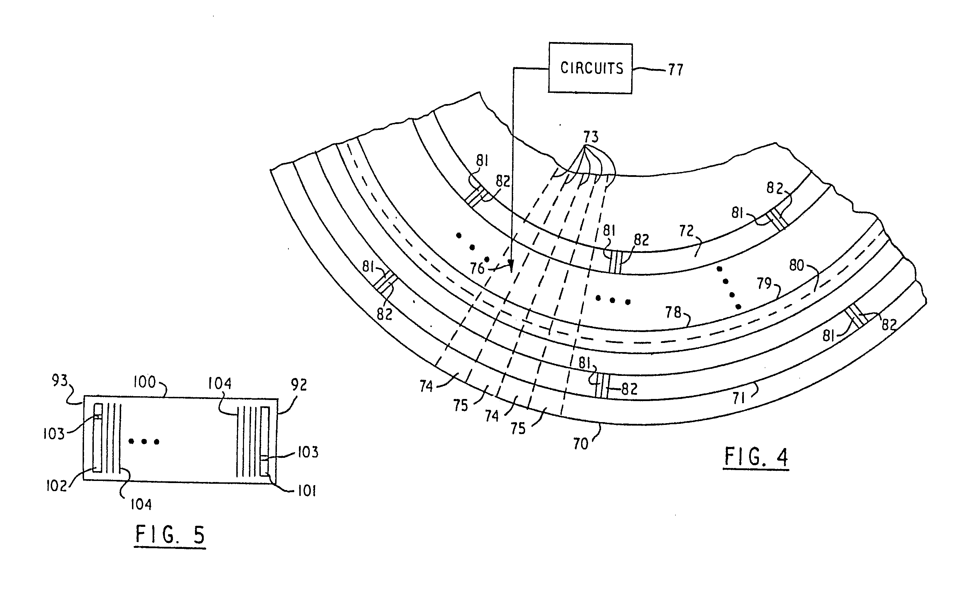

In its application to disk recorder/readers, a magnetic record storage disk 70 (Fig. 4) includes an outer annular track 71, which contains "contents of record" information and an inner annular track 72 which contains this information. Between these tracks 71 and 72, data is recorded in concentric annular data tracks, such as track 78, by a transducer 76 connected to circuits 77. The transducer 76 is movable radially over the surface of the disk 70 and, for low track density, steps inwardly or outwardly between data tracks by a distance equal to the width of a data track. In the recording, data and servo track position information alternates, sectors 74 of the data tracks, such as track 78, being used for data, and sectors 75, separated from sectors 74 along lines 73, being used for servo or track position information.

For high track density recording, the transducer is stepped by a distance equal to half the width of a data track, so that after recording in the data track 78, for example, the transducer records additional data in a track which overlaps the area 79 of the track 78 leaving the area 80 unaffected.

The transducer 76 is similar to the head 16 of Fig. 2, having a wide write gap and two half width aligned read gaps. For low track density reading, one or other or both of the read gaps is used to supply read back information to the circuits 77 and the transducer is stepped by a distance equal to the width of a data track to read an adjacent track.

For high track density reading, both gaps are used and the output of one is buffered during reading from sectors 74 of areas 79 and 80 and serialised whilst the sectors 75 are adjacent the transducer. The transducer is stepped by the full width of a data track when it is desired to read from an adjacent pair of half width tracks.

Similar circuits to the circuits of Figure 2 can be employed in Circuits 77. The outer and inner tracks 71 and 72 are recorded in the wide track format, that is, low track density.

If the data tracks, such as track 78, are all to be recorded at one track density, information as to that track density may be recorded in areas 81 in the tracks 71 and 72. In areas 82 is recorded information as the lineal density of recording. These areas are repeated around the tracks 71 and 72 to decrease total initial access time.

Individual intermediate data tracks, such as track 78, can be recorded in either wide or narrow format. For example, in the outer area of the disk, the higher relative linear speed may enable narrow tracks to be employed. Then the outer data tracks, such as track 78, may be recorded as two half width tracks in areas 79 and 80, whilst the inner data tracks are each recorded as a wide track. Information as to the track density may then be recorded in the sectors 74 or 75 of individual data tracks.

The concentric data tracks of Figure 4 can be replaced by a spiral data track. For low track density recording, the transducer would be moved radially at a rate of one full track width per revolution. For high track density recording, the transducer would be moved radially at a rate of one half full track width per revolution. For both high and low track density reading, the transducer would be moved radially at a rate of one full track width per revolution. In the former case, both read gaps of the transducer would be used, the output from one being buffered as described above.

In the application of the invention to a magnetic card recorder/reader, a magnetic card 100 (Fig. 5) includes parallel data tracks 104 between end tracks 101 and 102 containing "contents of card" information, including track density information in areas 103.

The recorder/reader includes a magnetic transducer head, similar to the head 16 of Figure 2, having a wide write gap and two aligned half width read gaps. Data tracks 104 are recorded at low or high track density by stepping the transducer between tracks by full or half width steps. During read back of data tracks recorded at low or high track density, the transducer head is stepped between tracks by full width steps. In the case of high track density recording, both read gaps are used, the output from one being buffered as described above.

Only one end track may be provided, but it is preferred to use the two end tracks 101 and 102, as shown, because then the orientation of the card is not as important when inserted into the reader. For example, if card 100 is inserted as from end 92, track 101 would be read first. However, if the card were inserted from end 93, then track 102 would be read first. The recording apparatus can read in either direction provided the detection is symmetrical and the appropriate data handling circuits are provided.

**Claims**

1. A data recorder/reader adapted to exchange data with a record member, including a transducer (16) adapted to scan tracks on the record member and having a write gap (17) with a first track width (W2) and a read gap (18) parallel to the write gap and aligned with the write gap in the direction of scan, the read gap having a width (W1) corresponding to a second track width, being a fraction of the first track width, and positioning means (27, 29, 50, 46) operative during recording to cause relative movement of the transducer and record member transverse to the tracks according to juxtaposed second width tracks for high track density recording or according to juxtaposed first width tracks for low tracks density recording, and operative during reproducing to cause relative movement of the transducer and record member transverse to the tracks according to juxtaposed first width tracks for low track density reading, characterised in that there is a plurality N (≥2) of read gaps (18, 19) aligned with each other parallel to the write gap and aligned with the write gap in the direction of scan, each of the read gaps having a width (W1) corresponding to the second track width, being substantially a fraction 1/N of the first track width, whereby to scan simultaneously a plurality N of second width tracks or a single first width track, in that the positioning means is operative during reproducing to cause relative movement of the transducer and record member transverse to the tracks according to juxtaposed groups of a plurality N of second width tracks for high and low track density reading, in that means (31, 37, 39) is provided simultaneously receiving signals from the read gaps which simultaneously scan a plurality N of second width tracks, and in that means (43, 33) is provided for serializing all signals produced from the simultaneous scanning for high track density reading.

2. A recorder/reader according to claim 1, in which the recorder/reader has a cyclic period (T0—T0') of operation during a predetermined portion (T1—T2) of which the transducer (16) scans a data record area on the record member, means (31, 33) for serially transferring signals from one of the read gaps (18) while the head is scanning the record area, means (37, 39) for momentarily storing signals read from the other read gap (19) or gaps during the predetermined portion of the cyclic period, and means (43, 33) for serially transferring the stored signals from the other read gap or gaps during a portion of the cyclic period outside the predetermined portion.

3. A recorder/reader according to claim 2, in which the transducer alternately scans data and non-data areas, the means for serializing signals includes means (33) for immediately processing signals from the one read gap, the means for momentarily storing signals includes a buffer (39) for each read gap other than the one read gap, and the means for serially transferring the stored signals includes means (43) for selectively transferring buffer signals through the immediate signal processing means.

4. A recorder/reader according to any preceding claim, including density indication means (46) for indicating a high track density or a low track density recording to be read, the means (43, 33) for serializing signals being responsive to a low track density indication for supplying signals from the one read gap (18) to the exclusion of signals read from any read gap other than the one read gap and means (S1) responsive to a read indication to inhibit the positioning means from causing relative movement of the transducer and record member according to juxtaposed second width tracks.

5. A recorder/reader according to claim 4, in which the record member includes a recorded indication of recording track density (61; 62, 63), and the transducer is operative to sense the recording track density indication and to initiate control of the signal serializing means and track switching means in accordance with the indication so sensed.

6. A recorder/reader according to claim 5, including means to force a low track density indication whenever the recorded density indication is to be sensed.

7. A recorder/reader according to any preceding claim, including density indication means (46) for indicating a high track density or a low track density recording to be recorded, and means (52) responsive to a high track density indication to enable the positioning means to cause relative movement of the transducer and record member according to juxtaposed second width tracks.

8. A recorder/reader according to claim 3 or any claim appendant to claim 3, in which the signal receiving means includes a readback circuit (31, 37) for each of the read gaps, each of the readback circuits, except the first readback circuit, being connected to supply output signals to a buffer (39), and electronic switch means (43) connecting the immediate signal processing means (33) to receive signals selectively from the first readback circuit or from the buffer or buffers.

9. A recorder/reader according to any preceding claim, in which a rotor supports the transducer for rotation along a scan path and the record member is an elongated flexible tape (55) scanned obliquely by the transducer as it rotates, and the positioning means includes a tape transport means (27) for selectively moving the record member a half step or a whole step.

10. A recorder/reader according to claim 9, in which the transducer is arranged to transduce data on the record medium during substantially one half revolution of the head.

11. A recorder/reader according to any of claims 1 to 8, in which the record member is a circular disk (70) and the transducer (76) scans radially displaced tracks (78) on the disk, the tracks having interleaved track position and data areas (75, 74) (Fig. 4).

12. A method of operating a data recorder/reader according to claim 1, to read signals recorded in parallel data tracks with high track density, including the steps of simultaneously longitudinally scanning a selected plurality N of record tracks using the read gaps of the transducer to produce a plurality N of simultaneous trains of sensed signals, causing relative movement of the record medium and the transducer by a predetermined transverse distance equal to the first track width, repeating the simultaneous scanning and relative movement causing steps and, for each such repetition, processing one of the trains of sensed signals as such signals are sensed from the record medium, buffering and storing all other trains of sensed signals, and processing the buffered trains before repeating each simultaneous scanning.

**Revendications**

1. Un dispositif d'enregistrement et de lecture de données conçu pour échanger des données avec un élément d'enregistrement, comprenant un transducteur (16) conçu pour balayer des pistes sur l'élément d'enregistrement et présentant un entrefer d'écriture (17) pour une première largeur de piste (W2) et un entrefer de lecture (18) parallèle à l'entrefer d'écriture et aligné avec ce dernier dans la direction du balayage, l'entrefer de lecture ayant une largeur (W1) correspondant à une deuxième largeur de piste qui correspond à une fraction de la première largeur de piste, et des moyens de positionnement (27, 29, 50, 46) fonctionnant pendant l'enregistrement pour provoquer le mouvement relatif du transducteur et de l'élément d'enregistrement transversalement aux pistes en fonction de pistes juxtaposées de seconde largeur pour un enregistrement à densité de pistes élevée ou en fonction de pistes juxtaposées de première largeur pour un enregistrement à faible densité de pistes, et fonctionnant pendant la reproduction pour provoquer le mouvement relatif du transducteur et de l'élément d'enregistrement transversalement aux pistes en fonction de pistes juxtaposées de première largeur pour une lecture à faible densité de pistes, caractérisé en ce qu'il y a une pluralité N (≥2) d'entrefers de lecture (18, 19) alignés les uns avec les autres parallèlement à l'entrefer d'écriture et alignés avec l'entrefer d'écriture dans la direction du balayage, chacun des entrefers de lecture ayant une largeur (W1) correspondant à la deuxième largeur de piste qui est pratiquement égale à une fraction 1/N de la première largeur de piste, leur permettant de balayer simultanément une pluralité N de pistes de deuxième largeur ou une piste de première largeur unique, en ce que les moyens de positionnement fonctionnent pendant la reproduction pour provoquer le mouvement relatif du transducteur et de l'élément d'enregistrement transversalement aux pistes en fonction de groupes juxtaposés d'une pluralité N de pistes de deuxième largeur pour la lecture à densités de pistes élevée et faible, en ce que des moyens (31, 37, 39) sont prévus pour recevoir simultanément des signaux depuis les entrefers de lecture qui balayent simultanément une pluralité N de pistes de deuxième largeur, et en ce que des moyens (43, 33) sont prévus pour sérialiser tous les signaux produits à partir du balayage simultané pour la lecture à densité de pistes élevée.

2. Un dispositif d'enregistrement et de lecture selon la revendication 1 dans lequel l'enregistreur/lecteur a une période de fonctionnement cyclique (T0—T0') pendant une partie prédéterminée (T1—T2) de laquelle le transducteur (16) balaye une zone d'enregistrement de données sur le milieu d'enregistrement, des moyens (31, 33) pour transférer des signaux en série depuis l'un des entrefers de lecture (18) pendant que la tête balaye la zone d'enregistrement, des moyens (37, 39) pour emmagasiner provisoirement des signaux lus à partir de l'autre ou des autres entrefers de lecture (19) pendant la partie prédéterminée de la période cyclique, et des moyens (43, 33) pour transférer en série les signaux emmagasinés à partie de l'autre ou des autres entrefers de lecture pendant une partie de la période cyclique en dehors de la partie prédéterminée.

3. Un dispositif d'enregistrement et de lecture selon la revendication 2, dans lequel le transducteur balaye alternativement des zones de données et sans données, les moyens pour sérialiser des signaux comprennent des moyens (33) pour immédiatement traiter des signaux issus d'un entrefer de lecture, les moyens pour emmagasiner provisoirement des signaux comprennent une mémoire intermédiaire (39) pour chaque entrefer de lecture autre que le premier entrefer de lecture, et les moyens pour transférer en série les signaux emmagasinés comprennent des moyens (43) pour transférer sélectivement des signaux de mémoire intermédiaire au travers des moyens de traitement immédiat des signaux.

4. Un dispositif d'enregistrement et de lecture selon l'une quelconque des revendications précédentes, comprenant des moyens indicateurs de densité (46) pour indiquer un enregistrement à lire à densité de pistes élevée ou à faible densité de pistes, les moyens (43, 33) pour sérialiser des signaux répondant à une indication de faible densité de pistes pour délivrer des signaux à partir du premier entrefer de lecture (18) à l'exclusion des signaux lus à partir de tout entrefer de lecture autre que le premier entrefer de lecture et des moyens (S1) répondant à une indication de lecture pour empêcher les moyens de positionnement de provoquer le mouvement relatif du transducteur et de l'élément d'enregistrement en fonction des pistes juxtaposées de deuxième largeur.

5. Un dispositif d'enregistrement et de lecture selon la revendication 4 dans lequel l'élément d'enregistrement comprend une indication enregistrée de la densité des pistes d'enregistrement (61, 62, 63) et le transducteur fonctionnne pour détecter l'indication de la densité des pistes d'enregistrement et pour amorcer la commande des moyens de sérialisation de signaux et des moyens de commutation de pistes selon l'indication ainsi détectée.

6. Un dispositif d'enregistrement et de lecture selon la revendication 5, comprenant des moyens pour forcer une indication de faible densité de pistes chaque fois que l'indication de la densité des piste d'enregistrement est à détecter.

7. Un dispositif d'enregistrement et de lecture selon l'un quelconque des revendications précédentes, comprenant des moyens d'indication de densité (46) pour indiquer qu'un enregistrement à densité de pistes élevée ou à faible densité de pistes, est à effectuer, et des moyens (52) répondant à une indication de densité de pistes élevée pour permettre aux moyens de positionnement de provoquer le mouvement relatif du transducteur et de l'élément d'enregistrement en fonction des pistes de seconde largeur juxtaposées.

8. Un dispositif d'enregistrement et de lecture selon la revendication 3 ou n'importe quelle revendication dépendant de la revendication 3, dans lequel les moyens de réception de signaux comprennent un circuit de relecture (31, 37) pour chacun des entrefers de lecture, chacun des circuits de relecture à l'exception du premier, étant connecté pour délivrer des signaux de sortie à une mémoire intermédiaire (39), et des moyens de commutation électronique (43) connectant les moyens de traitement immédiat des signaux (33) pour recevoir sélectivement des signaux à partir du premier circuit de relecture ou de la ou des mémoires intermédiaires.

9. Un dispositif d'enregistrement et de lecture selon l'une quelconque des revendications précédentes, dans lequel un rotor porte le transducteur et permet à ce dernier de tourner suivant une trajectoire de balayage et dans lequel l'élément d'enregistrement est une bande flexible allongée (55) balayée obliquement par le transducteur lorsque celui-ci est entraîné en rotation, et dans lequel les moyens de positionnement comprennent un moyen de transport de bande (27) pour entraîner sélectivement l'élément d'enregistrement sur un demi pas ou sur un pas complet.

10. Un dispositif d'enregistrement et de lecture selon la revendication 9 dans lequel le transducteur est agencé pour assurer la transduction de données sur le milieu d'enregistrement pendant pratiquement une demi-révolution de la tête.

11. Un dispositif d'enregistrement et le lecture selon l'une quelconque des revendications 1 à 8, dans lequel l'élément d'enregistrement est un disque circulaire (70) et dans lequel le transducteur (76) balaye des pistes (78) radialement séparées sur le disque, les pistes présentant des zones imbriquées de localisation de piste et de données (75, 74) (figure 4).

12. Un procédé de fonctionnement d'un dispositif d'enregistrement et de lecture selon la revendication 1, pour lire des signaux enregistrés sur des pistes de données parallèles avec une densité de pistes élevée, comprenant les étapes de balayage longitudinal simultané d'une pluralité sélectionnée N de pistes d'enregistrement en utilisant les entrefers de lecture du transducteur pour produire une pluralité N de trains simultanés de signaux détectés, provoquant un mouvement relatif du milieu d'enregistrement et du transducteur, sur une distance transversale prédéterminée égale à la première largeur de piste, la répétition du balayage simultané et des étapes provoquant ledit mouvement relatif et, pour chacune de ces répétitions, le traitement de l'un des trains de signaux détectés lorsque ces signaux sont détectés à partie du milieu d'enregistrement, la mise en mémoire intermédiaire et l'emmagasinage de tous les autres trains de signaux détectés et le traitement des trains mis en mémoire intermédiaire avant la répétion de chaque balayage simultané.

**Patentansprüche**

1. Datenschreib-/Lesegerät zum Austausch von Daten, mit einem Aufzeichnungsträger mit einem zum Abtasten von Spuren auf dem Aufzeichnungsträger geeigneten Übertrager (16), der einen ersten Schreibspalt (17) mit einer ersten Spurbreite (W2) und einen Lesespalt (18) mit einer Spurbreite (W1) parallel zum Schreibspalt und in Abtastrichtung auf diese ausgerichtet enthält, wobei die zweite Spurbreite einen Bruchteil der ersten Spurbreite beträgt, sowie mit Positioniereinrichtungen (27, 29, 50, 46), die bei der Aufzeichnung den Übertrager und den Aufzeichnungsträger relative zueinander quer zu den nebeneinanderliegenden Spuren erster oder zweiter Breite für eine Aufzeichnung mit niedriger bzw. hoher Dichte und bei der Wiedergabe quer zu den nebeneinanderliegenden Spuren erster Dichte zum Lesen von Aufzeichnungen mit niedriger Spurdichte bewegen, dadurch gekennzeichnet, daß mehrere N (≥2) Lesespalte (18, 19) mit einer der zweiten Spurbreite entsprechenden Breite (W1) miteinander parallel zum Schreibspalt und in Abtastrichtung auf diesem ausgerichtet vorhanden sind, wobei die Breite im wesentlichen ein Bruchteil 1/N der ersten Spurbreite ist, so daß dadurch gleichzeitig eine Anzahl N von Spuren der zweiten Spurbreite oder eine einzige Spur mit der ersten Spurbreite abgetastet werden können, weiterhin dadurch gekennzeichnet, daß die Positioniereinrichtung während der Wiedergabe den Übertrager und den Aufzeichnungsträger relativ quer zu den Spuren nebeneinanderliegender Gruppen einer Anzahl N mit Spuren der zweiten Spurbreite zum Lesen von Spuren mit hoher und niedriger Dichte bewegt, daß Einrichtungen (31, 37, 39) vorhanden sind, die gleichzeitig Signale von den gleichzeitig eine Anzahl N Spuren der zweiten Spurbreite abtastenden Lesespalte empfangen, und daß Einrichtungen (43, 33) vorhanden sind, um alle von gleichzeitigen Abtasten der Spuren mit hoher Dichte erzeugten Signale in Serie zu setzen.

2. Gerät nach Anspruch 1 mit einer zyklischen Arbeitsperiode (T0—T0'), in deren vorgegebenem Teil (T1—T2) der Übertrager (16) einen Datenaufzeichnungsbereich auf dem Aufzeichnungsträger abtastet, mit Einrichtungen (31, 33) zur seriellen Übertragung von Signalen von einem Lesespalt (18), während der Kopf den Aufzeichnungsbereich abtastet, mit Einrichtungen (37, 39) zur kruzzeitigen Speicherung der von dem anderen Lesespalt (19) oder den Spalten gelesenen Signale während des vorgegebenen Teiles der zyklischen Periode und mit Einrichtungen (43, 33) zur seriellen Übertragung der gespeicherten Signale von dem anderen Lesespalt oder den Spälten während eines Teiles der zyklischen Perioden, der außerhalb des vorgegebenen Teiles liegt.

3. Gerät nach Anspruch 2, in dem der Übertrager abwechselnd Bereiche mit und ohne Daten abtastet und die Einrichtung zur Serienumsetzung der Signale eine Einrichtung (33) zur direkten Verarbeitung von Signalen von einem Lesespalt, die Einrichtung zur kurzzeitigen Speicherung von Signalen einen Puffer (39) für jeden Lesespalt mit Ausnahme des einen Lesespalts und die Einrichtung zur seriellen Übertragung der gespeicherten Signale Einrichtungen (43) zu selektiven Übertragung von Puffersignalen durch die direkte Signalverarbeitungseinrichtung enthält.

4. Gerät nach einem der vorhergehenden Ansprüche mit einem Dichteanzeiger (46), der anzeigt, ob Aufzeichnungen mit hoher oder niedriger Spurdichte gelesen werden, worin die Einrichtungen (43, 33) zur Serienumsetzung der Signale auf eine Anzeige niedriger Spurdichte mit der Lieferung von Signalen von dem einen Lesespalt (18) reagieren und von den anderen Lesespalten gelesene Signale ausschließen, und worin Einrichtungen (S1) auf eine Leseanzeige reagieren und die Positioniereinrichtung sperren, die den Übertrager und den Aufzeichnungsträger relativ zu nebeneinanderliegenden Spuren der zweiten Breite verstellen.

5. Gerät nach Anspruch 4, worin der Aufzeichnungsträger eine aufgezeichnete Anzeige der aufgezeichneten Spurdichte enthält (61; 62, 63), und der Übertrager diese Anzeige abfühlt und die Steuerung des Signalserienumsetzers und der Spurumschaltung entsprechend der abgefühlten Anzeige einleitet.

6. Gerät nach Anspruch 5 mit Einrichtungen zum Erzwingen einer Anzeige für niedrige Spurdichte, sobald die Anzeige für die aufgezeichnete Dichte abgefühlt werden soll.

7. Gerät nach einem der vorhergehenden Ansprüche mit einem eine aufzuzeichnende hohe oder niedrige Spurdichte anzeigenden Dichteanzeiger (46) und Einrichtungen (52), die auf die Anzeige einer hohen Spurdichte ansprechen und der Positioniereinrichtung eine relative Bewegung des Übertragers und des Aufzeichnungsträgers entsprechend den nebeneinanderliegenden Spuren mit der zweiten Spurbreite gestatten.

8. Gerät nach Anspruch 3 oder einem der folgenden Ansprüche, in dem die Signalempfangseinrichtung eine Rückleseschaltung (31, 37) für jeden Lesespalt enthält, die mit Ausnahme der Schaltung für den ersten Spalt ihre Ausgangssignale an einen Puffer (39) liefern, und in dem ein elektronischer Umschalter (43) die direkte Signalverarbeitungseinrichtung (33) so schaltet, daß sie selektiv Signale von der ersten Rückleseschaltung oder vom Puffer empfängt.

9. Gerät nach einem der vorhergehenden Ansprüche, worin ein Rotor den Übertrager zur Drehung auf eine Abtastbahn träft und der Aufzeichnungsträger ein längliches flexibles Band (55) ist, das vom Übertrager bei seiner Umdrehung schräg abgetastet wird, und worin die Verstelleinrichtung einen Bandtransport (27) zur wahlweisen Bewegung des Aufzeichnungsträgers um einen ganzen oder halben Schritt enthält.

10. Gerät nach Anspruch 9, worin der Übertrager so angeordnet ist, daß er Daten auf dem Aufzeichnungsträger im wesentlichen während einer halben Umdrehung des Kopfes überträgt.

11. Gerät nach einem der Ansprüche 1 bis 8, worin der Aufzeichnungsträger eine runde Platte (70) ist und der Übertrager (76) radial versetzte Spuren (78) mit verschachtelten Spurpositions- und Datenbereichen (75, 74; Fig. 4) abtastet.

12. Verfahren zum Betreiben eines Datenaufzeichnungs/Lesegerätes nach Anspruch 1 zum Lesen von in parallelen Datenspuren mit hoher Spurdichte aufgezeichneten Signalen, umfassend die Schritte der gleichzeitigen Abtastung einer ausgewählten Anzahl N von Aufzeichnungsspuren in Längsrichtung mit den Lesespalten des Übertragers zur Erzeugung von N gleichzeitigen Zügen abgefühlter Signale, die relative Bewegung des Aufzeichnungsträgers und des Übertragers um eine vorgegebene quer verlaufende Strecke gleich der ersten Spurweite, Wiederholung der gleichzeitigen Abtastung und relativen Bewegung und für jede derartige Wiederholung die Verarbeitung eines Zuges der abgetasteten Signale, wie sie vom Aufzeichnungsträger abgetastet werden, das Puffern und Speichern aller anderen Züge abgetasteter Signale und deren Verarbeitung vor der Wiederholung jeder gleichzeitigen Abtastung.

FIG. 1

FIG. 2

1

FIG. 3

FIG. 4

FIG. 5

3